Europäisches Patentamt

(19) European Patent Office

Office européen des brevets

(11) **EP 0 766 261 A1**

(12) **EUROPEAN PATENT APPLICATION**

(43) Date of publication:
02.04.1997 Bulletin 1997/14

(51) Int. Cl.⁶: $G21C\ 3/32$, $G21C\ 3/328$

(21) Application number: 96113849.2

(22) Date of filing: 29.08.1996

(84) Designated Contracting States:
**DE ES SE**

(30) Priority: 28.09.1995 US 535693

(71) Applicant: **Siemens Power Corporation**
**Richland, WA 99352 (US)**

(72) Inventors:
• **Williamson, Harold E.**
**Richland, WA 99352 (US)**
• **Walters, Kenneth V.**
**Kennewick, WA 99336 (US)**

(74) Representative: **Fuchs, Franz-Josef, Dr.-Ing.**
**Postfach 22 13 17**
**80503 München (DE)**

(54) **Light water reactor nuclear fuel assemblies having closely packed fuel rod lattices**

(57) The invention describes a nuclear fuel assembly having fuel rods arranged in an orthogonally symmetrical close-packed triangular lattice within a square boundary typical of light water reactor (LWR) fuel assemblies orthogonally symmetrical. Thus, the advantage of the greater rod density made available by a triangular lattice relative to the square rod lattice previously used in square fuel assemblies is obtained while retaining the analytical convenience and the more uniform coolant flow distribution associated with symmetry.

FIG. 1

EP 0 766 261 A1

**Description**

Introduction

Field of the Invention

The present invention relates generally to nuclear fuel assemblies for nuclear reactors, and more particularly to triangular fuel rod configurations for fuel assemblies that have a square cross-sectional area and which are orthogonally symmetrical.

Background of the Invention

Current operating light water reactors utilize fuel assemblies that have a square cross-sectional area in which the nuclear fuel rods are located. Light water reactor designs employ a square array for the layout for control rod drives and consequently the area allocated for fuel assemblies is square. The fuel rods are distributed in the available square area so that there will be an approximately uniform distribution of coolant/moderator area for each fuel rod. The approach has been to arrange the fuel rods within the available square area so that there was an equal number of rows and columns of fuel rods with a uniform center-to-center distance (i.e. pitch) between fuel rods. This arrangement is referred to as a square lattice, as lines drawn through adjacent fuel rod centers divide the area into a number of uniform squares. The reactor power and power distribution (axial, radial and local peaking) set the volumetric power density generated in the fuel rods. The minimum spacing between fuel rods to assure adequate cooling of adjacent fuel rod surfaces, which has been determined by heat transfer tests, must be provided with allowance for manufacturing tolerances and predicted fuel rod bowing during operation. For a uniform array of fuel rods, the required minimum rod-to-rod spacing limits the maximum allowable fuel rod diameter for that array. Uniform distribution of uranium fuel and coolant moderator (i.e. water) has been typically obtained by selecting an equal number of rows and columns of fuel rods in a square lattice array and positioning the center of the nuclear fuel rods at the corners of the squares. Thus, the number of rows of fuel rods equal the number of fuel rods in a row. The fuel rod array is sized to obtain sufficient heat transfer area for the volume of nuclear fuel in a fuel rod to enable the removal of the heat generated by the fuel within temperature limits of the materials used for the fuel rod.

Boiling water reactor (BWR) fuel assemblies typically have such a fuel rod array in which the fuel rods are arranged in rows with the same number of fuel rods in each row as there are rows in the array. In adjacent rows, fuel rods are located with their centers at the corners of squares. Such square rod arrays or lattices are commonly named according to the number of rows of rods and number of rods in a row such as 8x8, 9x9, 10x10, etc. Regardless of the number of rows of rods, each array is constrained to fit within a standard size fuel assembly channel.

The use of a square lattice whereby fuel rods are located with their centers at the corners of squares results in a larger flow area at the center of the square formed by four fuel rods than is necessary. This is an inefficient use of the cross-sectional area within a fuel assembly channel. It is desirable to reduce the fuel rod linear heat generation rate and the internal fuel rod temperature for a given fuel assembly power level by increasing the number of fuel rods. This is done, for example, by changing from a 10x10 fuel rod array to an 11x11 array. Since the fuel rod array is constrained to fit within the fixed dimensions of a standard fuel assembly channel and is required to have a certain minimum fuel rod surface to surface and fuel rod surface to channel wall surface spacing, increasing the number of rows of fuel rods and number of fuel rods in a row necessitates a decrease in the fuel rod diameter. The fuel rod diameter must be reduced to maintain surface to surface spacing since the fuel rod center to center distance is reduced. The spacing between rods to allow for adequate cooling and to accommodate fuel rod bow cannot be reduced in proportion to the rod-to-rod pitch. As the quantity of the fuel rods is increased in a square lattice, the increased number of fuel rods will not compensate for the required fuel rod diameter reduction with the result that the uranium loading in the fuel assembly is reduced in the more finely divided array.

A triangular lattice array in which the centers of fuel rods are located at the vertices of a triangle is more desirable than the square lattice array in that it provides a more efficient arrangement of fuel rods while also maintaining required rod-to-rod spacing. For a specified fuel rod diameter and minimum rod-to-rod spacing, the triangular pitch allows a tighter packing of fuel rods within the given cross sectional area of the fuel assembly channel, resulting in a better allocation of area for flow of coolant water among fuel rods. The higher density of fuel rods will permit a higher loading of uranium, and better heat transfer characteristics as the coolant water is on the average in closer proximity to the fuel rod surfaces. In addition, more fuel rod heat transfer surface can be incorporated in a unit area than in a square lattice of the same pitch, and greater flexibility for internal moderation using water rods and inner water channels can be obtained. Since the higher density of fuel rods permits a higher loading of uranium as the number of fuel rods in the assembly is increased, more fuel rod locations can be reserved for water rods or water channels without causing a decrease in the uranium loading in comparison to a square lattice array which will have fewer fuel rod positions.

A triangular lattice however cannot be made to fit into a square cross-sectional area by having an equal number of rows and columns of fuel rods, and therefore such a lattice could not be placed within a fuel assembly having a square cross-sectional area and be orthogonally symmetrical.

The most efficient triangular fuel rod pitch (highest packing density) is one with the centers of fuel rods at the vertices of equilateral triangles, but this can result in a square arrangement in only very limited cases, for example, an arrangement of 12 rows of 10 rods in each row. This arrangement which is discussed further in co-pending U.S. Patent Application No. 08/316,657 filed September 30, 1994 entitled 10x12 Hexagonal BWR Fuel Assembly and assigned to the assignee of the present invention is not however orthogonally symmetrical. Closely packed triangular lattice arrangements may be made to conform to a square outer boundary by adjusting the height to base dimension ratio of the triangular pitch as discussed further in co-pending U.S. Patent Application No. 08/315,379 filed September 30, 1994 entitled Triangular Lattice for LWR Square Fuel Assemblies and assigned to the assignee of the present invention. Other triangular lattices as well as those triangular lattice arrangements with an even number of rows of fuel rods will not be symmetrical, and will therefore encounter added complexity in analysis and positioning of a central water channel or water rods for optimum moderator distribution.

It would therefore be an advantage to have a method of locating and positioning fuel rods in a square fuel assembly in a triangular lattice where the array of fuel rods is orthogonally symmetrical.

Summary of the Invention

In accordance with one aspect of the invention, a nuclear fuel assembly for boiling water reactors is provided having a plurality of elongated parallel fuel rods supported between a lower tie plate positioned toward the bottom of the assembly and an upper tie plate positioned toward the top of the assembly, an outer channel surrounding the plurality of fuel rods and having a substantially square cross-sectional area for conducting coolant/moderator about the fuel rods from the bottom of the assembly toward the top of assembly, at least one spacer for positioning and retaining the fuel rods in a predetermined configuration, and a first group of the fuel rods being arranged with a predetermined pitch in a rectangular array and a second group of the fuel rods being arranged with a predetermined pitch in a triangular array where the centers of the fuel rods are located at the vertices of isosceles triangles with a height to base ratio determined by:

$$\frac{h}{b} = \frac{n \cdot xr}{n \cdot x + a}$$

where:

h/b = the ratio of the height to the base of a triangular pitch of the second group of the fuel rods being arranged in a triangular array to fit within the substantially square cross-sectional area of the outer channel;
N = number of fuel rods in a row having the largest number of fuel rods;
n = number of rod-to-rod spaces in the row having the largest number of fuel rods = N-1;
M = number of rows of fuel rods;
a = M-N;
P = number of adjacent rows of the first group of fuel rods being arranged with a predetermined pitch in a rectangular array at the centerline of the cross-sectional area of the outer channel;
x = number of rod-to-rod spaces in each of the adjacent rows of the first group of fuel rods = P-1;
r = c/b = ratio of the distance c between adjacent rows of the first group of fuel rods to the distance b forming the base of the triangular pitch of the second group of fuel rods being arranged in the triangular array; and
c = the distance between adjacent rows of the first group of fuel rods being arranged in the rectangular array.

Brief Description of the Drawings

Figure 1 is a horizontal cross-sectional view of a BWR fuel assembly having an arrangement of fuel rods with a closely packed triangular lattice within a square boundary and which is orthogonally symmetrical in accordance with the present invention;

Figure 2 is a horizontal cross-sectional view of a BWR fuel assembly having another arrangement of fuel rods with a closely packed triangular lattice within a square boundary and which is orthogonally symmetrical in accordance with the present invention;

Figure 3 is a horizontal cross-sectional view of the BWR fuel assembly shown in Figure 1 with six centrally located fuel rods replaced by a large central water rod or channel;

Figure 4 is a horizontal cross-sectional view of the BWR fuel assembly shown in Figure 2 with ten centrally located fuel rods replaced by a large central water rod or channel;

Figure 5 is a cross-sectional view of the BWR fuel assembly having an arrangement of fuel rods with a closely packed triangular lattice within a square boundary and with a large square shaped center water channel positioned in the spaces normally occupied by nine centrally located fuel rods and which is orthogonally symmetrical; and

Figure 6 is a horizontal cross-sectional view of a BWR fuel assembly having another arrangement of fuel rods with a closely packed triangular lattice within a square boundary and which is orthogonally symmetrical.

Detailed Description of the Invention

A triangular fuel rod pitch is obtained for square fuel assemblies by placing the centers of the fuel rods at the vertices of isosceles triangles with a height to base dimension ratio determined to create a closely packed triangular pitch arrangement of fuel rods that maximizes the number of fuel rods in a unit area for a specified fuel rod diameter and minimum rod-to-rod spacing within a square envelope. The rod diameter and minimum rod-to-rod spacing will be set to meet a variety of criteria, such as, adequate allowance for rod bowing, flow resistance, and water to fuel ratio for neutronic efficiency. The isosceles triangles should be as near equilateral as possible, with height to base dimension ratios between 0.8 and 0.93, to maximize the packing density of the fuel rods with a specified diameter and minimum rod-to-rod spacing.

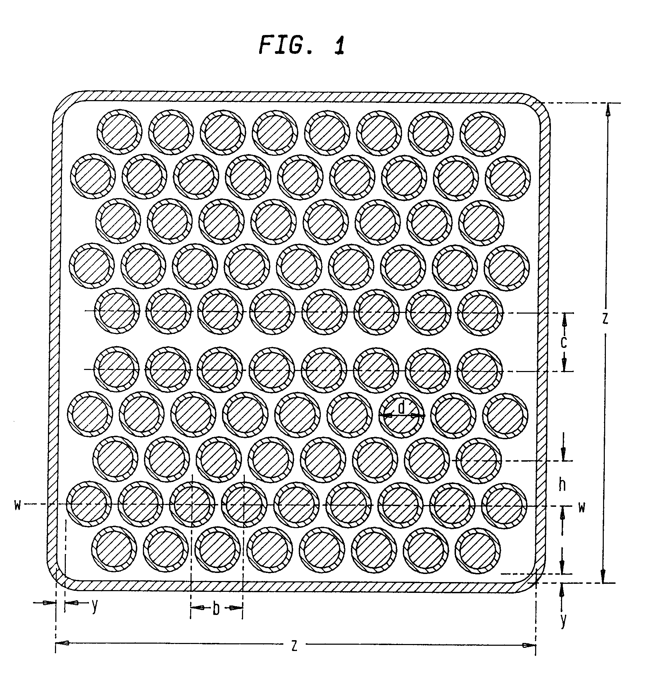

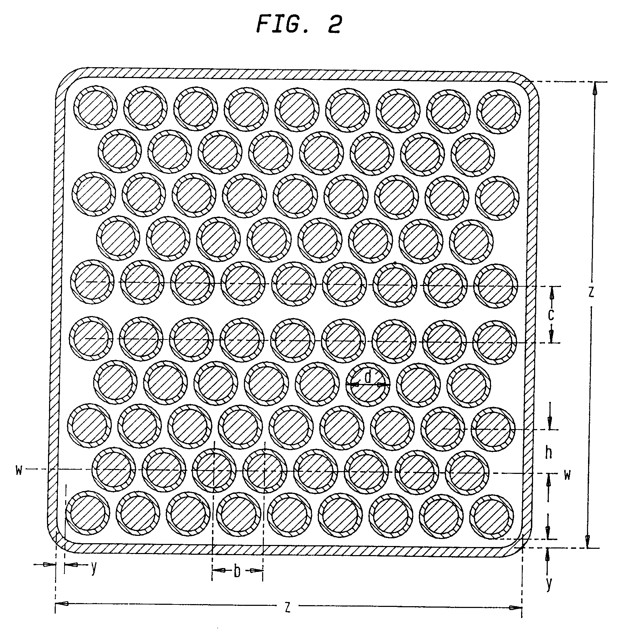

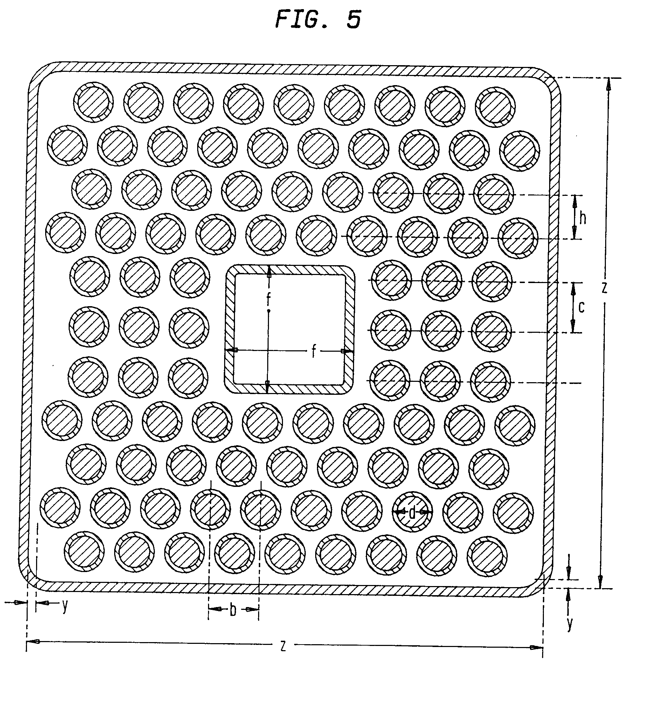

In accordance with the present invention, to obtain an orthogonally symmetrical closely packed triangular lattice in a square boundary for lattices with an even number of fuel rod rows, the square boundary within which the fuel rods are to be positioned is divided into two equal rectangles by a centerline parallel to the rows of fuel rods. The triangular lattice of fuel rods in one rectangle is made reflectively identical to the lattice in the other rectangle, as illustrated in Figure 1 for an arrangement of 10 rows of fuel rods with the peripheral row of fuel rods having 8 rods and in Figure 2 for an alternative arrangement of 10 rows of fuel rods with the peripheral row of fuel rods having 9 rods. The fuel rods in the row of fuel rods of each of the two rectangles which are adjacent to one another are positioned to have a rectangular pitch. To obtain an orthogonally symmetrical closely packed triangular lattice in a square boundary for lattices with an odd number of fuel rod rows, the center three rows of fuel rods are selected to have the same number of fuel rods and are positioned to have a rectangular pitch, and the triangular lattice of fuel rods on each side of the center rows of fuel rods are made reflectively identical to one another as shown for example in Figure 5.

The center rows of fuel rods which are adjacent to one another may be spaced at the minimum rod spacing selected and the base and height of the triangular lattice specified to conform to the dimensions of the square boundary, or the triangular lattice may be made equilateral and the space between the fuel rods in the adjacent center rows specified to suit the dimensions of the square boundary, or the space between the adjacent rows can be selected to be between these extremes, and the base and the height of the triangular lattice selected to fit the square boundary.

In accordance with the present invention, a method for obtaining a fuel rod lattice having orthogonal symmetry of a square fuel assembly composed of fuel rods on a triangular pitch and with a portion of the fuel rod rows on a rectangular pitch is achieved by positioning the centers of the fuel rods at the vertices of isosceles triangles with a height to base ratio determined by:

$$\frac{h}{b} = \frac{n \text{-} xr}{n \text{-} x \text{+} a} \qquad\qquad \text{(EQUATION 1)}$$

where:

h/b =   ratio of the height to the base of a triangular pitch to fit within a square boundary;
N =   number of rods in widest row of fuel rods which alternate in number;
n =   number of rod-to-rod spaces in a row of fuel rods in the widest row of fuel rods = N-1;
M =   number of rows of fuel rods;
a =   M-N;
P =   number of adjacent identical rows of rods (at centerline);
x =   number of rod-to-rod spaces in each of the adjacent identical rows of fuel rods = P-1;
r =   c/b = ratio of the distance c between adjacent identical rows of rods to the distance b between fuel rods within a row of alternating numbers of fuel rods (base of triangular pitch; and
c =   centerline to centerline spacing of adjacent identical rows of fuel rods in the rectangular array.

For a fuel rod arrangement in which the spacing c of the fuel rods in the rectangular lattice is chosen to be equal to the pitch b of the fuel rods in the triangular lattice, then by substituting r=c/b=1 into Equation 1:

$$\frac{h}{b} = \frac{n \cdot x}{n \cdot x + a}.$$ (EQUATION 2)

For a fuel rod arrangement in which the centers of the fuel rods in the triangular lattice are positioned at the vertices of equilateral instead of isosceles triangles to form an hexagonal array, then by substituting 0.866 [i.e. ($\sqrt{3}$)/2] for h/b in Equation 1 and rearranging:

$$c = \frac{b}{x}[0.134n + 0.866(x \cdot a)].$$ (EQUATION 3)

These equations are much more convenient than a trial and error approach and take advantage of recognition of the relationship discovered between the difference in number of rows and columns, number of rods in rows, and the number of spaces between the rows of fuel rods arranged in a rectangular lattice.

The pitch b of the fuel rods in a particular triangular lattice is determined from the dimensions of the outer channel, the number of rods (N) in the widest row (W), and clearances required between adjacent rod surfaces and between channel surfaces and adjacent rod surfaces which is expressed for a BWR by the following:

$$b = \frac{z \cdot 2y + s}{N}$$ (EQUATION 4)

where:

z = inside dimension of the square outer channel;
y = distance between the inner wall of the outer channel and the fuel rod; and
s = space between adjacent fuel rod surfaces.

The following are examples of the present invention to create orthogonally symmetrical lattice designs.

Referring to Figure 1, for the row shown as W having the greatest number of fuel rods, N = 9, and n = 8. The number of fuel rod rows M is 10, and a = M - N = 1 . The number of adjacent identical rows of rods P at the centerline is 2 and x = P-1 is 1. The inside dimension z of the channel of a boiling water reactor is determined by the dimensions of the reactor core internal structure and the required wall thickness of the channel and is assumed for this example to be 5.278 inches. A typical value of the channel-to-fuel space would be on the order of 0.146 inch. The external lateral dimension within which the fuel lattice is to be positioned is z-2y, or 4.986 inches. A typical value of rod surface to rod surface space s is 0.136 inch. The fuel rod pitch is determined by allocating an equal amount of space to each fuel rod in the row as follows:

$$b = \frac{z \cdot 2y + s}{N} = \frac{4.986 + 0.136}{9} = 0.569 \ inch.$$

The fuel rod diameter, b - s, is 0.569 - 0.136 = 0.433 inch. If c is set equal to b in this lattice, then from Equation 2:

$$\frac{h}{b} = \frac{n \cdot x}{n \cdot x + a} = \frac{8 \cdot 1}{8 \cdot 1 + 1} = \frac{7}{8},$$

and

$$h = (\frac{7}{8})b = (0.875)(0.569) = 0.498 \ inch.$$

The base angles $\alpha$ of the isosceles triangles which form the pattern of the triangular lattice shown in Figure 1 are determined by

$$\tan \alpha = \frac{h}{0.5b} = \frac{1}{0.5} \times \frac{7}{8} = \frac{7}{4} = 1.75, where \ \alpha = 60.26°.$$

In another example and referring to Figure 2, N = 9, n=N-1=8 , M=10, and a= M-N= 10-9=1 . The number of adjacent identical rows of rods P = 2, and x= P-1 = 1 . If c is set equal to b, then from Equation 2:

$$\frac{h}{b}=\frac{n\text{-}x}{n\text{-}x+a}=\frac{8\text{-}1}{8\text{-}1+1}=\frac{7}{8},$$

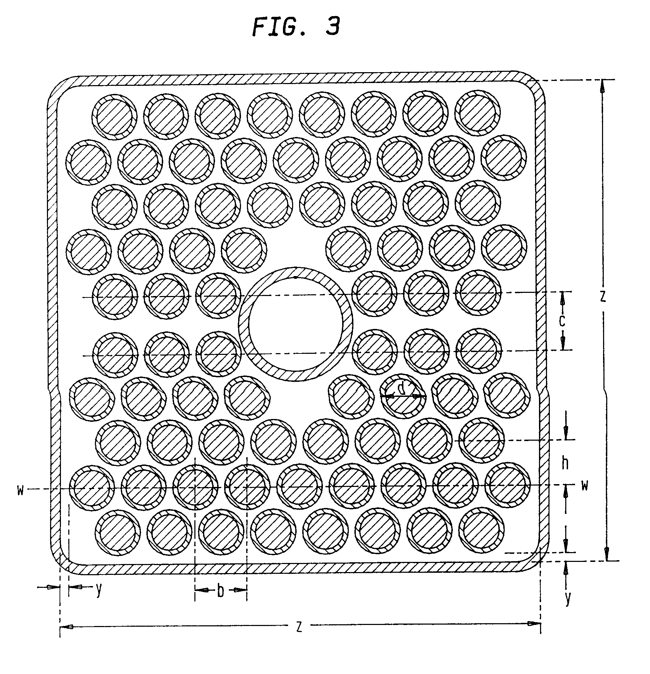

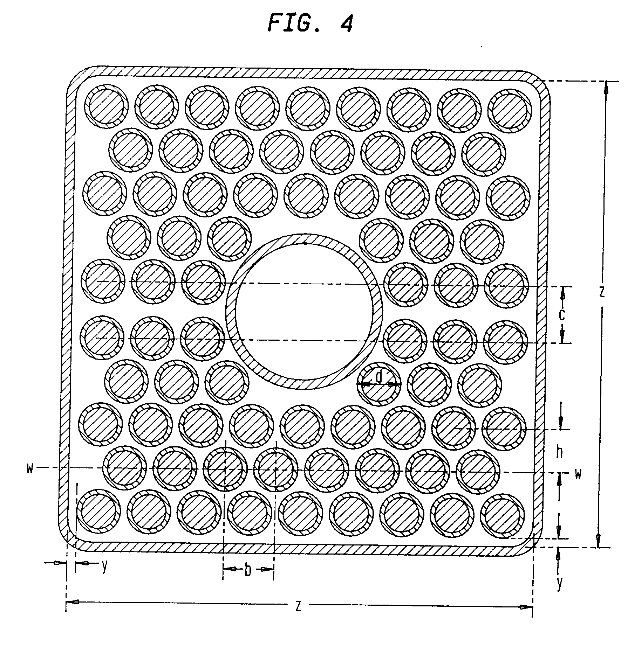

and the base angles of the isosceles triangles which form the pattern of the triangular lattice shown in Figure 2 are 60.26 degrees. The arrangements shown in Figures 1 and 2 can be modified by the substitution of a central large cylindrical or oval inner water channel or water rod for the centrally located fuel rods to flatten the thermal neutron flux across the fuel assembly, while maintaining the symmetry of the arrangement. This arrangement is illustrated in Figure 3 for the lattice of Figure 1 in which six fuel rods are replaced by an inner water channel, and in Figure 4 for the lattice of Figure 2 in which 10 fuel rods are similarly replaced by an inner water channel. In either alternative, several water rods or part length fuel rods could be utilized instead of the inner water channel.

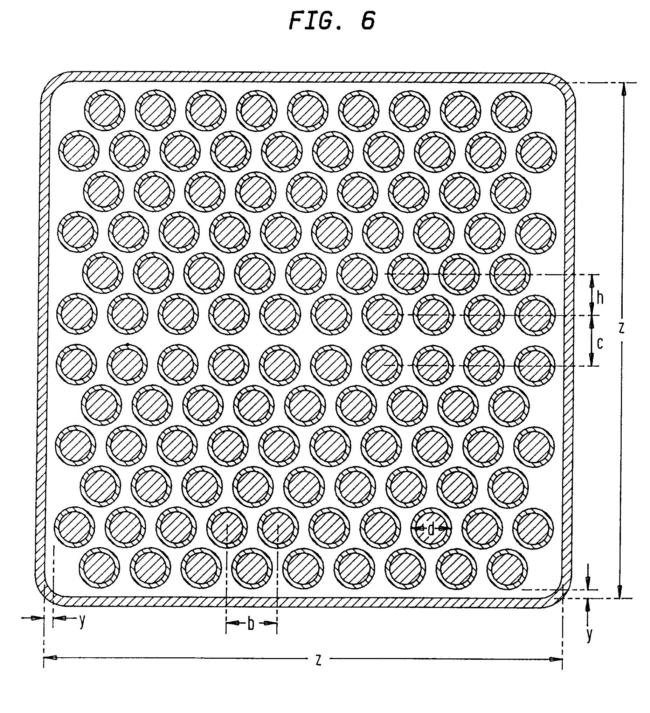

For a more finely divided lattice as shown for example in Figure 6 where N = 10, n = 9, M = 12, a = 2, P = 2, x = 1, and c is set equal to b, then from Equation 2:

$$\frac{h}{b}=\frac{9\text{-}1}{9\text{-}1+2}=\frac{8}{10},$$

and the base angles of the isosceles triangles which form the pattern of such a triangular lattice are 57.99 degrees.

Orthogonal symmetry of lattices having an even number of fuel rod rows can be maintained if the number of fuel rod rows P arranged in a rectangular lattice is increased by an even number.

In each of the examples shown in Figs. 1-4, orthogonal symmetry was obtained for the lattice arrangements having an even number of fuel rod rows. To obtain an orthogonally symmetrical closely packed triangular lattice in a rectangular boundary for lattices with an odd number of fuel rod rows, in accordance with the present invention the center three rows of fuel rods are selected to have the same number of fuel rods and are positioned to have a rectangular pitch, and the triangular lattice of fuel rods on each side of the center rows of fuel rods are made reflectively identical to one another. Such an arrangement with the center rows of rods on a rectangular pitch maintains orthogonal symmetry of an array of fuel rods having an odd number of rows and facilitates the substitution of a square center water channel for a central square array of fuel rods. For such a lattice which is shown for example in Figure 5, M=11, N = 10, n = 9, a=1, P=3, x=P-1=2 . If c is set equal to b, then from Equation 2:

$$\frac{h}{b}=\frac{n\text{-}x}{n\text{-}x\text{-}a}=\frac{9\text{-}2}{9\text{-}2+1}=\frac{7}{8}$$

and the base angles of the isosceles triangles which form the pattern of the triangular lattice shown in Figure 5 are 60.26 degrees. In order to have orthogonal symmetry for lattices with an odd number of fuel rod rows, the number of fuel rod rows P must be odd. Thus, the lattice arrangement shown in Figure 5 can be increased in size or extended in increments of two rod rows.

An advantage of the arrangement shown in Figure 5 is that the center group of nine rods has been replaced by a centrally located square water channel for improved moderation and attendant nuclear reactivity characteristics. This is the only configuration for a 10 rod wide row lattice arrangement in which the center nine rods are centrally located.

The indentations of rows of fuel rods allows two straight walls of the outer channel to be contoured to follow more closely the outer configuration of the fuel rod rows which results in a fuel assembly having improved uniformity of distribution of coolant flow area.

While the present invention has been particularly shown and described with reference to preferred embodiments thereof, it will be understood by those skilled in the art that various changes in form and details may be made therein without departing from the spirit and scope of the invention.

**Claims**

1. A nuclear fuel assembly for boiling water reactors, the assembly having a plurality of elongated parallel fuel rods supported between a lower tie plate positioned toward the bottom of the assembly and an upper tie plate positioned toward the top of the assembly, an outer channel surrounding the plurality of fuel rods and having a substantially square cross-sectional area for conducting coolant/moderator about the fuel rods from the bottom of the assembly toward the top of assembly, at least one spacer for positioning and retaining the fuel rods in a predetermined configuration, and a first group of the fuel rods being arranged with a predetermined pitch in a rectangular array and a second group of the fuel rods being arranged with a predetermined pitch in a triangular array where the centers of the fuel rods are located at the vertices of isosceles triangles with a height to base ratio determined by:

$$\frac{h}{b} = \frac{n - xr}{n - x + a}$$

where:

h/b = the ratio of the height to the base of a triangular pitch of the second group of the fuel rods being arranged in a triangular array to fit within the substantially square cross-sectional area of the outer channel;

N = number of fuel rods in a row having the largest number of fuel rods;

n = number of rod-to-rod spaces in the row having the largest number of fuel rods = N-1;

M = number of rows of fuel rods;

a = M-N;

P = number of adjacent rows of the first group of fuel rods being arranged with a predetermined pitch in a rectangular array at the centerline of the cross-sectional area of the outer channel;

x = number of rod-to-rod spaces in each of the adjacent rows of the first group of fuel rods = P-1;

r = c/b = ratio of the distance c between adjacent rows of the first group of fuel rods to the distance b forming the base of the triangular pitch of the second group of fuel rods being arranged in the triangular array; and

c = the distance between adjacent rows of the first group of fuel rods being arranged in the rectangular array.

2. A nuclear fuel assembly for boiling water reactors, the assembly having a plurality of elongated parallel fuel rods supported between a lower tie plate positioned toward the bottom of the assembly and an upper tie plate positioned toward the top of the assembly, an outer channel surrounding the plurality of fuel rods and having a substantially square cross-sectional area for conducting coolant/moderator about the fuel rods from the bottom of the assembly toward the top of assembly, at least one spacer for positioning and retaining the fuel rods in a predetermined configuration, and a first group of the fuel rods being arranged with a predetermined pitch in a rectangular array and a second group of the fuel rods being arranged with a predetermined pitch in a triangular array where the centers of the fuel rods are located at the vertices of isosceles triangles with a height to base ratio determined by:

$$\frac{h}{b} = \frac{n - x}{n - x + a}$$

where:

h/b = the ratio of the height to the base of a triangular pitch of the second group of the fuel rods being arranged in a triangular array to fit within the substantially square cross-sectional area of the outer channel;

N = number of fuel rods in a row having the largest number of fuel rods;

n = number of rod-to-rod spaces in the row having the largest number of fuel rods = N-1;

M = number of rows of fuel rods;

a = M-N;

P = number of adjacent rows of the first group of fuel rods being arranged with a predetermined pitch in a rectangular array at the centerline of the cross-sectional area of the outer channel;

x = number of rod-to-rod spaces in each of the adjacent rows of the first group of fuel rods = P-1; and

where the distance b forming the base of the triangular pitch of the second group of fuel rods being arranged in the triangular array equals the distance between adjacent rows of the first group of fuel rods being arranged in the rectangular array.

3. A nuclear fuel assembly for boiling water reactors, the assembly having a plurality of elongated parallel fuel rods supported between a lower tie plate positioned toward the bottom of the assembly and an upper tie plate positioned toward the top of the assembly, an outer channel surrounding the plurality of fuel rods and having a substantially square cross-sectional area for conducting coolant/moderator about the fuel rods from the bottom of the assembly toward the top of assembly, at least one spacer for positioning and retaining the fuel rods in a predetermined configuration, and a first group of the fuel rods being arranged with a predetermined pitch in a rectangular array and a second group of the fuel rods being arranged with a predetermined pitch in a triangular array where the centers of the fuel rods are located at the vertices of equilateral triangles with a base determined by:

$$c = \frac{b}{x}[0.134\, n + 0.866(x - a)]$$

where:

b = the base of a triangular pitch of the second group of the fuel rods being arranged in an equilateral triangular array to fit within the substantially square cross-sectional area of the outer channel;

N = number of fuel rods in a row having the largest number of fuel rods;

n = number of rod-to-rod spaces in the row having the largest number of fuel rods = N-1;

M = number of rows of fuel rods;

a = M-N;

P = number of adjacent rows of the first group of fuel rods being arranged with a predetermined pitch in a rectangular array at the centerline of the cross-sectional area of the outer channel;

x = number of rod-to-rod spaces in each of the adjacent rows of the first group of fuel rods = P-1; and

c = the distance between adjacent rows of the first group of fuel rods being arranged in the rectangular array.

FIG. 1

FIG. 2

## FIG. 3

FIG. 4

*FIG. 5*

## FIG. 6

European Patent
Office

**EUROPEAN SEARCH REPORT**

Application Number

EP 96 11 3849

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US-A-5 299 244 (YAMAUCHI ET AL.) * the whole document * --- | 1-3 | G21C3/32 G21C3/328 |
| A | DE-A-41 08 767 (SIEMENS AG) * the whole document * --- | 1-3 | |
| A | US-A-5 128 097 (FUKASAWA ET AL.) * the whole document * --- | 1-3 | |
| A | DATABASE WPI Derwent Publications Ltd., London, GB; AN 87-357910 (51) XP002020599 & JP-A-62 259 086 (HITACHI KK) , 11 November 1987 * abstract * --- | 1-3 | |
| A,D, P | EP-A-0 704 856 (SIEMENS POWER CORPORATION) * the whole document * --- | 1-3 | |
| A,D, P | EP-A-0 704 857 (SIEMENS POWER CORPORATION) * the whole document * ----- | 1-3 | TECHNICAL FIELDS SEARCHED (Int.Cl.6) G21C |

The present search report has been drawn up for all claims

| Place of search | Date of completion of the search | Examiner |
|---|---|---|
| MUNICH | 9 December 1996 | Frisch, K |

EPO FORM 1503 03.82 (P04C01)